(19) Europäisches Patentamt
European Patent Office
Office européen des brevets

(11) **EP 1 499 803 B1**

(12) **FASCICULE DE BREVET EUROPEEN**

(45) Date de publication et mention
de la délivrance du brevet:
**19.12.2007 Bulletin 2007/51**

(51) Int Cl.:
*F02D 41/40* *(2006.01)* *F02D 35/02* *(2006.01)*
*F02D 41/14* *(2006.01)*

(21) Numéro de dépôt: **03746324.7**

(22) Date de dépôt: **08.04.2003**

(86) Numéro de dépôt international:
**PCT/FR2003/001100**

(87) Numéro de publication internationale:
**WO 2003/087562 (23.10.2003 Gazette 2003/43)**

(54) **MOTEUR DIESEL COMPORTANT UN DISPOSITIF DE CONTROLE DU DEBIT D'INJECTION DE CARBURANT**

DIESELMOTOR MIT EINER VORRICHTUNG ZUR STEUERUNG DES STROMS VON EINGESPRITZTEM KRAFTSTOFF

DIESEL ENGINE COMPRISING A DEVICE FOR CONTROLLING THE FLOW OF INJECTED FUEL

(84) Etats contractants désignés:
**AT BE BG CH CY CZ DE DK EE ES FI FR GB GR HU IE IT LI LU MC NL PT RO SE SI SK TR**

(30) Priorité: **17.04.2002 FR 0204815**

(43) Date de publication de la demande:
**26.01.2005 Bulletin 2005/04**

(73) Titulaires:
• **Peugeot Citroen Automobiles SA**
**78943 Vélizy-Villacoublay Cedex (FR)**
• **Delphi Technologies, Inc.**
**Troy, MI 48007 (US)**

(72) Inventeurs:
• **VERMONET, Claire**
**F-75116 Paris (FR)**
• **SOUCHON, Vincent**
**F-75017 Paris (FR)**
• **MEISSONNIER, Guillaume**
**F-41190 Landes le Gaulois (FR)**

(74) Mandataire: **Grynwald, Albert et al**
**SCHMIT - CHRETIEN - SCHIHIN SNC - CABINET GRYNWALD**
**16 Rue de la Paix**
**75002 Paris (FR)**

(56) Documents cités:
EP-A- 1 132 596       WO-A-99/61771
DE-A- 4 312 587       US-A- 5 070 836
US-A- 5 941 213       US-A- 6 062 193

**Description**

La présente invention se rapporte à un moteur diesel comportant un dispositif de contrôle du débit d'injection de carburant.

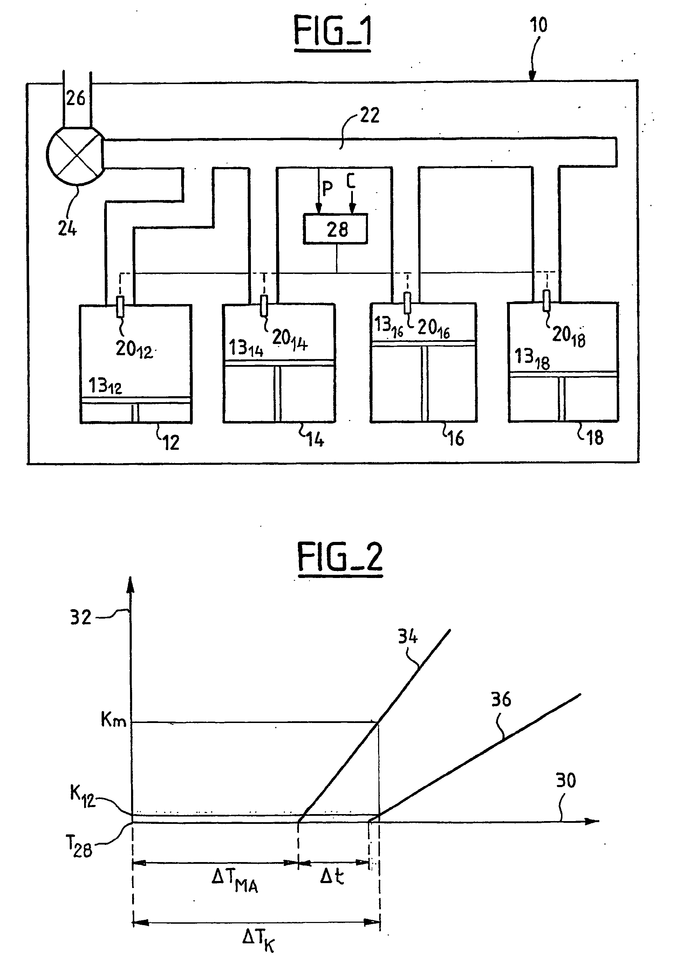

Dans un moteur 10 diesel (figure 1) à rampe commune, chaque cylindre 12, 14, 16 et 18 comporte une chambre de combustion $13_{12}$, $13_{14}$, $13_{16}$ ou $13_{18}$ dans laquelle est injecté un carburant au moyen d'un injecteur $20_{12}$, $20_{14}$, $20_{16}$ ou $20_{18}$ relié à la rampe commune 22. Dans cette dernière, le carburant est maintenu à haute pression par une pompe 24 connectée, via un conduit 26, au réservoir (non représenté) du véhicule, permettant ainsi d'effectuer des injections de carburant dans chaque cylindre à des pressions élevées, généralement comprises entre 200 et 1600 bars.

Le fonctionnement de chaque injecteur $20_i$ est contrôlé par une unité 28 qui commande la quantité de carburant injectée par cet injecteur dans la chambre $13_i$. Pour cela, cette unité 28 reçoit des informations telles que le couple C requis par le conducteur du véhicule ou la pression P du carburant dans la rampe commune, et commande en conséquence une durée d'ouverture ou d'activation de l'injecteur $20_i$ telle que ce dernier injecte dans la chambre $13_i$ la quantité de carburant nécessaire à l'obtention du couple requis par le conducteur.

Cette durée d'activation est déterminée en fonction de la quantité de carburant devant être injectée dans les chambres et de la pression de carburant dans la rampe commune. La durée d'activation dépend en outre des caractéristiques de l'injecteur, c'est pourquoi elle ést prédéterminée par le constructeur, par exemple de façon empirique. Toutefois, il est connu que le fonctionnement d'un injecteur équipant un véhicule présente des écarts par rapport au fonctionnement prédéterminé. En effet, la prédétermination est effectuée au moyen d'un injecteur modélisé ne prenant en compte ni les tolérances acceptées lors de l'usinage des injecteurs, ni surtout l'usure de ces derniers comme expliqué ci-dessous à l'aide de la figure 2 qui représente le fonctionnement d'un injecteur $20_i$ après un certain temps de fonctionnement, par exemple l'injecteur $20_{12}$, et d'un injecteur modélisé utilisé pour déterminer les données mémorisées dans l'unité 28.

Sur cette figure 2 on a représenté la quantité de carburant injectée en milligrammes (axe des ordonnées 32) dans la chambre de combustion du cylindre i par l'injecteur modélisé (courbe 34) en fonction d'une durée (axe des abscisses 30) d'activation de cet injecteur déterminée en microsecondes. La courbe 36 correspond à l'injection effectuée par l'injecteur $20_{12}$ usé.

A partir de la courbe 34, on constate dans un premier temps que, pour un injecteur modélisé, il existe un temps minimal $\Delta T_{MA}$ d'activation à compter de l'émission de la commande d'injection (instant $T_{28}$) avant que l'injection de carburant ne débute dans la chambre et que, dans un deuxième temps, la quantité de carburant injectée varie linéairement par rapport au temps, ce rapport entre quantité de carburant injectée et temps d'activation étant dénommé par la suite pente de fonctionnement de l'injecteur modélisé.

La courbe 36 montre que pour l'injecteur réel $20_{12}$ usé, le temps minimal d'activation est plus important : $\Delta T_{MA}$ et $\Delta t$. En outre, la pente de fonctionnement de l'injecteur $20_{12}$ est moins importante que celle de l'injecteur modélisé.

Ces écarts présentent des inconvénients gênants pour le fonctionnement du moteur. En effet, lorsqu'un injecteur fonctionne avec un décalage $\Delta t$ et/ou avec une pente de fonctionnement modifiée, les durées d'activation commandées par l'unité 28 provoquent l'injection d'une quantité de carburant dans les chambres de combustion distincte de la quantité optimale prédéterminée. Par exemple, en considérant qu'une quantité $K_m$ (figure 2) de carburant doit être injectée dans le cylindre 12, l'unité 28 commande une durée d'activation $\Delta T_K$ déterminée à partir de la courbe 34. Toutefois, l'injecteur $20_{12}$ introduit alors réellement une quantité $K_{12}$ de carburant déterminée par la courbe 36, sensiblement plus faible que la quantité attendue du fait des écarts de fonctionnement dus aux tolérances, à l'usinage et/ou à l'usure des injecteurs.

Ces écarts sont d'autant plus gênants que la pression du carburant est élevée car lorsque cette pression augmente, les écarts en quantités de carburant injectées entre un injecteur, par exemple ayant déjà fonctionné un certain temps, et un injecteur modélisé croissent généralement.

Ces écarts provoquent une baisse des performances (couple, puissance), une augmentation du bruit de combustion et/ou une augmentation des émissions polluantes du moteur, en particulier des oxydes d'azote.

Ces problèmes peuvent concerner l'ensemble des cylindres d'un moteur ou chaque cylindre séparément.

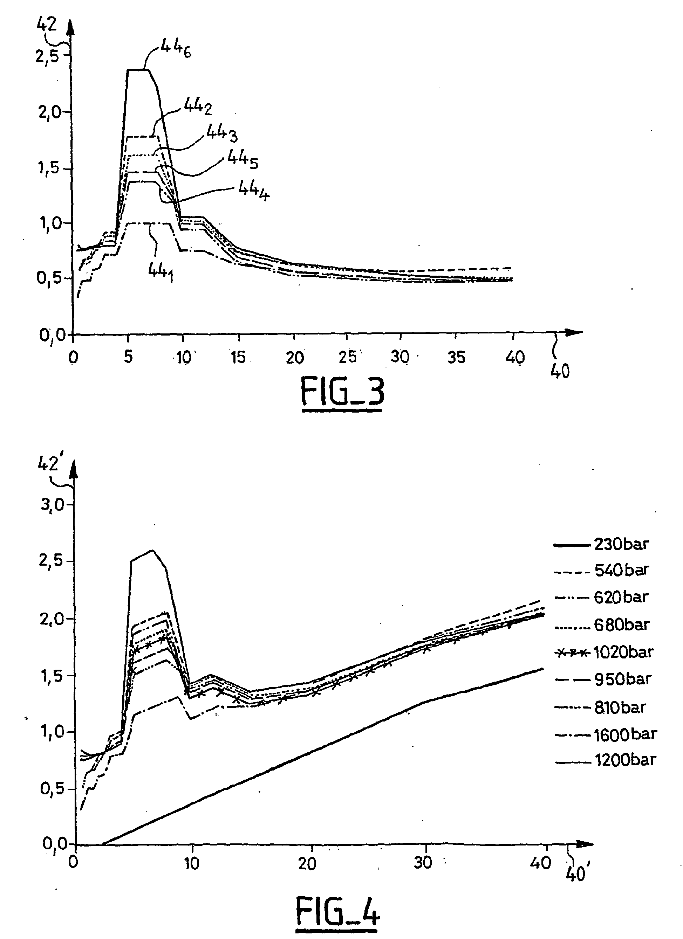

La présente invention résulte.de la constatation que la correction du décalage $\Delta t$ d'injection d'un injecteur est suffisante pour corriger de façon satisfaisante les écarts de fonctionnement des injecteurs réels par rapport au fonctionnement prédéterminé, comme décrit ci-dessous à l'aide des figures 3 et 4.

Sur la figure 3 on a représenté des écarts $\Delta g$ (axe des ordonnées 42), mesurés en milligrammes, entre, d'une part, la quantité de carburant commandée (axe des abscisses 40), également en milligrammes, à un premier injecteur présentant seulement un décalage $\Delta t$ d'injection, et, d'autre part, la quantité de carburant, en milligrammes, réellement injectée par cet injecteur. Différentes mesures $44_1$, $44_2$, $44_3$, $44_4$, $44_5$ et $44_6$ réalisées à différentes pressions de carburant à l'injection (respectivement 230, 540, 680, 810, 950 et 1200 bars pour les courbes $44_1$ à $44_6$) montrent que l'écart $\Delta g$ le plus important intervient pour des commandes de carburant inférieures à 15 milligrammes, notamment pour des commandes de l'ordre de 7 milligrammes. Ces mesures se rapportent à un décalage $\Delta t$, sans modification de pente par rapport à l'injecteur modélisé.

Sur la figure 4 on a représenté les écarts mesurés Δg' (axe des ordonnées 42') en milligrammes entre la quantité de carburant commandée (axe des abscisses 40'), également indiquée en milligrammes, et la quantité de carburant réellement injectée dans le cas où l'on tient compte pour l'injecteur testé non seulement d'un décalage Δt mais aussi d'une pente de fonctionnement modifiée.

En comparant les écarts Δg et Δg', on observe que pour des quantités de carburant commandées inférieures à 15 milligrammes, l'écart Δg de la figure 3, où seul un décalage Δt à l'injection est pris en compte, est pratiquement égal à l'écart Δg' de la figure 4 où le même décalage Δt à l'injection et une pente de fonctionnement distincte sont considérées.

Par ailleurs, la réglementation, notamment européenne, tend à limiter la quantité de carburant injectée dans les chambres de combustion à 15 mg dans les conditions habituelles de conduite. Autrement dit, les quantités injectées qui seraient supérieures à cette valeur ne sont pas représentatives de la majorité des parcours effectués par un véhicule, notamment des parcours urbains.

Pour déterminer la durée d'activation minimale ($\Delta T_{MA}$ et $\Delta t$) réellement nécessaire à cet injecteur afin d'effectuer une injection de carburant dans la chambre de combustion, c'est-à-dire le temps minimal d'activation de l'injecteur, on peut effectuer une série d'activations de durées croissantes d'un injecteur de telle sorte que, lorsqu'une injection de carburant est détectée, on attribue la durée minimale détectée comme durée d'activation minimale.

Toutefois, il peut être difficile de détecter une faible injection de carburant par exemple pour l'injection pilote, notamment du fait que cette dernière est proche du PMH qui génère une injection de carburant supérieure à l'injection de carburant propre à l'injection pilote.

C'est pourquoi, l'invention concerne un moteur diesel comportant un dispositif de contrôle du débit d'injection de carburant comprenant au moins un injecteur de carburant, alimentant une chambre de combustion, commandé par un processeur muni de moyens pour commander une série d'activations de l'injecteur de différentes durées, de moyens pour mesurer un temps minimal d'activation entre l'émission d'une commande et le début d'une injection, et de moyens pour commander ultérieurement l'injecteur en fonction du temps minimal d'activation mesuré, caractérisé en ce qu'il comprend des moyens pour évaluer le dégagement de chaleur effectué par le mélange d'air et de carburant injecté dans la chambre et mesurer le temps minimal d'activation à partir de ces évaluations.

Au moyen de mesures de dégagements de chaleur, la détection d'une injection de carburant, et donc la détermination du temps minimal d'activation, s'effectue avec une grande précision.

Dès lors, en comparant le temps minimal d'activation mesuré ($\Delta T_{MA}$ et $\Delta t$) avec le temps minimal d'activation prédéterminé ($\Delta T_{MA}$), le processeur peut déterminer le décalage ($\Delta t$) affectant cet injecteur. Le décalage ($\Delta t$) étant déterminé, le processeur peut corriger ses commandes vis-à-vis de l'injecteur en considérant que la durée d'activation minimale nécessaire pour débuter une injection est égale au temps minimal d'activation prédéterminé ($\Delta T_{MA}$) modifié par le décalage ($\Delta t$), positif ou négatif, déterminé par mesure. Ainsi, les durées d'activation commandées par le processeur sont corrigées de ce décalage ($\Delta t$).

Dans une réalisation, les moyens pour commander les durées d'activation comprennent des moyens pour modifier un temps minimal d'activation prédéterminé d'un décalage résultant de la mesure.

Selon une réalisation, le processeur comporte des moyens pour que les activations utilisées pour mesurer la pression soient distinctes des activations commandant les injections principales de carburant destinées à générer un couple au moteur.

Selon un mode de réalisation, le processeur comporte des moyens pour que les activations correspondent à des injections pilotes destinées à établir des conditions optimales de température dans le cylindre vis-à-vis des injections principales.

Dans une réalisation, le processeur comprend des moyens pour évaluer le dégagement de chaleur effectué par le mélange d'air et de carburant dans la chambre et mesurer le temps minimal d'activation à partir de ces évaluations.

Dans une réalisation, le processeur comporte des moyens pour déterminer le dégagement de chaleur à partir de mesures de pression dans la chambre.

Selon une réalisation, le processeur comporte des moyens pour évaluer le dégagement de chaleur à partir des mesures de pression à l'aide d'une relation du type :

$$\delta Q \approx 1/(\gamma-1) * (\gamma\ P*dV + V*dP),$$

où $\delta Q$ est le dégagement de chaleur, P et V la pression et le volume du mélange dans la chambre, dP et dV leurs variations et $\gamma$ est une constante.

Dans une réalisation, le processeur comprend des moyens pour déterminer le temps minimal d'activation en évaluant le dégagement de chaleur moyen sur un intervalle du cycle moteur comprenant l'injection pilote.

Dans une réalisation, le moteur comprend plusieurs injecteurs alimentés en carburant par une rampe commune.

Selon une réalisation, la série d'activations de l'injecteur est effectuée à pression d'alimentation et régime constants.

Dans une réalisation, le processeur comprend des moyens pour effectuer de façon périodique les séries d'activations.

L'invention concerne aussi un processeur de commande du débit d'injection de carburant dans un moteur à combustion interne comprenant des moyens pour commander une série d'activations de différentes durées à un injecteur alimentant une chambre de combustion, des moyens pour mesurer un temps minimal d'activation entre l'émission d'une commande et le début d'une injection, et des moyens pour commander ultérieurement cet injecteur en fonction du temps minimal d'activation mesuré, caractérisé en ce qu'il comprend des moyens pour évaluer le dégagement de chaleur effectué par le mélange d'air et de carburant dans la chambre et mesurer le temps minimal d'activation à partir de ces évaluations.

Dans une réalisation, le processeur comprend des moyens pour modifier un temps minimal d'activation prédéterminé d'un décalage résultant de la mesure.

Selon un mode de réalisation, le processeur comprend des moyens pour que les activations utilisées pour mesurer le temps minimal d'activation soient distinctes des activations commandant les injections principales de carburant destinées à générer un couple au moteur.

Dans une réalisation, le processeur comporte des moyens pour que les activations correspondent à des injections pilotes destinées à établir des conditions optimales de température dans le cylindre vis-à-vis de l'injection principale.

D'autres caractéristiques et avantages de l'invention apparaîtront avec la description de certaines de ses réalisations effectuée ci-dessous à titre non limitatif en se référant aux dessins ci-annexés sur lesquels :

La figure 1, déjà décrite, représente un moteur diesel connu équipé d'une rampe commune,
la figure 2, déjà décrite, représente des écarts de fonctionnement entre un injecteur réel et un injecteur modélisé,
les figures 3 et 4, déjà décrites, représentent des écarts de fonctionnement entre des injecteurs réels et un injecteur modélisé,
la figure 5 représente des mesures de pression dans une chambre de combustion suivant une première réalisation de l'invention,
la figure 6 représente des évaluations de dégagements de chaleur dans une chambre de combustion suivant une deuxième réalisation de l'invention,
la figure 7 représente des évaluations de dégagements de chaleur mesurés dans différentes chambres de combustion suivant différents temps d'activation des injecteurs de ces chambres,
la figure 8 est un diagramme représentant, sous forme de blocs, différentes opérations effectuées par une unité centrale conforme à l'invention,
la figure 9 est un diagramme, également sous forme de blocs, d'une opération représentée sur la figure 8,
la figure 10 représente une linéarisation de mesures effectuées dans une chambre de combustion conformément à l'invention,
la figure 11 représente une utilisation de la linéarisation décrite à la figure 10,
les figures 12 et 13 représentent des mesures de courant conformément à une troisième réalisation de l'invention,
les figures 14 et 15 représentent des mesures de courant conformément à une quatrième réalisation de l'invention, et
la figure 16 représente une combinaison de la troisième et de la quatrième réalisations de l'invention.

Les diverses réalisations de l'invention décrites ci-dessous sont relatives à des moteurs diesel comprenant des cylindres munis d'un injecteur de carburant commandé par une unité centrale (microprocesseur). Cette unité comprend des moyens, conformes à l'invention, pour effectuer une série d'activations de différentes durées pour chaque injecteur et mesurer le temps minimal d'activation de l'injecteur de façon à modifier les durées d'activation commandées à cet injecteur d'un décalage ($\Delta$t) déterminé entre le temps minimal d'activation mesuré et le temps minimal d'activation prédéterminé.

Par ailleurs, dans ces réalisations, la mesure du temps minimal d'activation d'un injecteur s'effectue en détectant les variations d'un paramètre de la chambre de combustion modifié par une injection de carburant, cette chambre comprenant des moyens pour transmettre ces détections à l'unité.

Dans une première réalisation, le paramètre physique détecté est la pression dans les chambres de combustion. A cet effet, chaque chambre comporte un capteur mesurant sa pression interne et transmettant ces mesures à l'unité centrale, cette dernière comprenant des moyens pour recevoir ces mesures et déterminer le temps minimal d'activation mesuré.

Dans cette première réalisation, comme dans toutes les réalisations décrites ci-dessous, les séries d'activations commandées à des injecteurs pour détecter leur décalage sont distinctes des activations commandant l'injection de carburant, dite injection principale, qui fournit le couple du moteur. Plus précisément, ces activations correspondent à des injections de carburant, dites pilotes, qui permettent d'établir dans les chambres de combustion des conditions optimales de température et de pression vis-à-vis de l'injection principale postérieure.

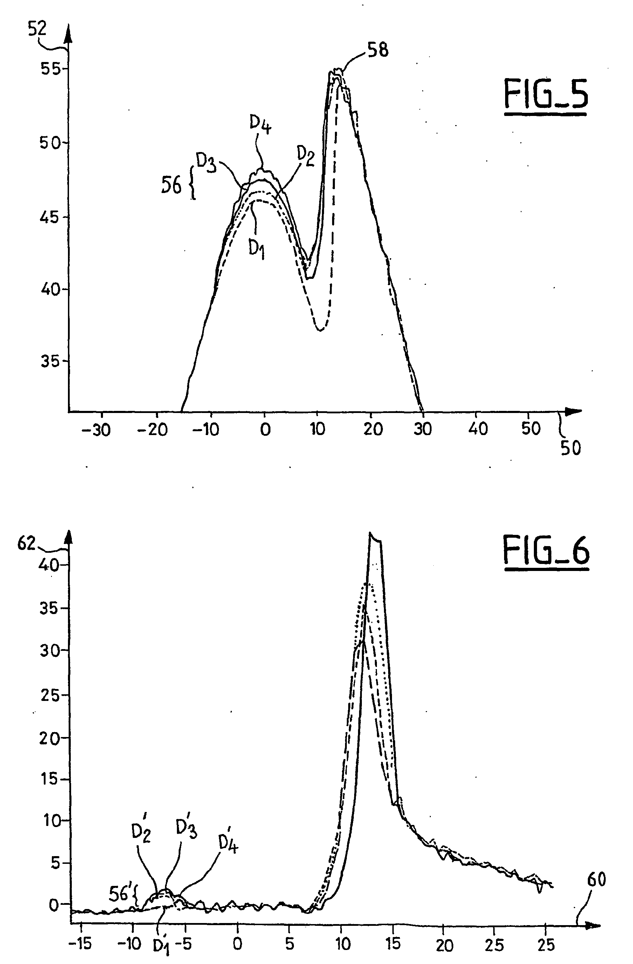

Ces deux injections, pilote et principale, sont représentées sur le diagramme de la figure 5 où l'axe 52 des ordonnées correspond à la pression mesurée en bars dans une chambre de combustion d'un cylindre et l'axe 50 des abscisses correspond à l'angle du vilebrequin de ce cylindre, c'est-à-dire le parcours du cycle à quatre temps (injection, compression, combustion/ détente et échappement) de combustion effectuée par ce cylindre. L'angle 0 correspond à la position du piston au Point Mort Haut (PMH), les angles négatifs correspondent aux étapes d'injection et de compression et les angles positifs correspondent aux étapes de combustion/détente et d'échappement.

La mesure de la pression dans la chambre alimentée par l'injecteur testé est effectuée pour différentes durées croissantes $d_1$, $d_2$, $d_3$ et $d_4$ d'activation à une pression de carburant à l'injection constante telle que 200, 400, 600, 800, 1200 ou 1600 bars. Une courbe $D_i$ indiquant la pression mesurée dans le cylindre en fonction de l'avancement du cycle de combustion est alors obtenue, à une pression donnée de carburant à l'injection, pour chaque durée $d_i$ d'activation de l'injecteur.

On observe alors que la durée $d_1$ (courbe $D_1$) est telle qu'aucune injection pilote n'est effectuée tandis que les durées $d_2$ (courbe $D_2$), $d_3$ (courbe $D_3$) et $d_4$ (courbe $D_4$) engendrent une injection pilote caractérisée par une augmentation 56 de pression, due à l'injection pilote, tandis qu'une deuxième augmentation 58 de pression est engendrée par l'injection principale.

En commandant une série d'injections pilotes de différentes durées d'activation à chaque cycle, une unité de commande peut établir la durée minimale d'activation d'un injecteur en vérifiant la présence d'une augmentation 56 de pression pour cette durée qui correspond alors au temps minimal d'activation mesuré pour cet injecteur. L'unité détermine le décalage Δt de cet injecteur c'est-à-dire l'écart entre le temps minimal d'activation prédéterminé et le temps minimal d'activation mesuré, et commande alors correctement l'injecteur en affectant ultérieurement (après ces mesures) les durées d'activation commandées à cet injecteur d'un décalage Δt.

Chaque courbe de la figure 5 est obtenue grâce à une pluralité d'essais effectués lorsque le moteur est à régime et à charge fixés, la quantité de carburant injectée lors de l'injection principale étant aussi constante.

Il peut être difficile de mesurer l'augmentation 56 de pression due à l'injection pilote, notamment du fait que cette dernière est proche du PMH qui génère une augmentation de pression supérieure à l'augmentation de pression 56 propre à l'injection pilote. Dans ce cas, les mesures peuvent être insuffisamment précises. C'est pourquoi, dans une deuxième réalisation de l'invention, des mesures de chaleur dégagée dans une chambre de combustion sont utilisées comme le paramètre physique permettant de déterminer un décalage d'un injecteur. De tels dégagements de chaleurs peuvent être déterminés, par exemple, à partir des mesures de pression effectuées précédemment. La détection des injections de carburant, et donc la détermination du temps minimal d'activation mesuré s'effectue alors avec une plus grande précision comme décrit ci-dessous.

Le dégagement de chaleur δQ effectué dans une chambre de combustion lors d'une injection de carburant engendre une variation de la pression de la chambre. En effet, en considérant le premier principe de la thermodynamique appliqué au système composé par le mélange gazeux d'air et de carburant injecté dans le cylindre, on peut écrire :

$$dU = \delta W + \delta Q \quad (1)$$

où dU est la variation d'énergie interne du carburant, et δQ et δW sont la chaleur et le travail reçus par ce mélange.

Le mélange étant considéré comme un gaz parfait, on peut aussi écrire:

$$dU = n*Cv*dT \quad (2) \quad et \quad PV = nRT \quad (3)$$

où n est le nombre de moles du mélange et Cv sa capacité calorifique, dT est sa variation de température et P, V et T sont respectivement sa pression, son volume et sa température, R étant une constante égale à 8,314.

Le travail élémentaire δW du mélange en extension étant égal à -PdV, la relation (1) devient :

$$\delta Q = n*Cv*dT + PdV \quad (1bis).$$

En différenciant (3) on obtient alors

$$n*dT = (P*dV + V*dP)/R,$$

ce qui permet de développer l'équation (lbis) en

$$\delta Q = (Cv/R+1)*P*dV+Cv/R*VdP \quad (1ter).$$

Pour un gaz parfait, on a la relation Cv/R=1/(γ-1) avec y coefficient polytropique, γ≈1.34, qui permet d'obtenir, à partir de (1ter) :

$$\delta Q=1/(\gamma-1)*(\gamma\ P*dV+V*dP). \quad (4)$$

$\delta Q$ se décompose en $\delta Q = \delta Q_{combustion} + \delta Q_{parois}$ où $\delta Q_{combustion}$ représente la chaleur reçue par le mélange lors de la combustion et $\delta Q_{parois}$ la chaleur perdue aux parois. Dans un premier temps, on néglige le terme $\delta Q_{parois}$.

La relation entre le dégagement de chaleur et l'avancement du cycle de fonctionnement du cylindre est représentée sur la figure 6 qui détermine le dégagement de chaleur dQ (axe 62 des ordonnées) évalué en joules par degré de vilebrequin dans une chambre de combustion en fonction de l'avancement du cycle de combustion dans le cylindre (axe 60 des abscisses) mesuré en degrés de vilebrequin. Cette figure 6 a été obtenue en appliquant la formule (4) ci-dessus à des mesures de pression obtenues comme représentées à la figure 5, le volume V et la variation dV du mélange gazeux étant obtenus à partir du volume de la chambre et de sa variation.

Sur cette figure 6 on a représenté différentes courbes (D'$_1$, D'$_2$, D'$_3$ et D'$_4$) représentant les dégagements de chaleur évalués en fonction de différentes durées (respectivement d'$_1$, d'$_2$, d'$_3$ et d'$_4$) d'activation de l'injecteur testé à des pressions constantes d'injection de carburant dans la chambre telles que 200, 400, 800, 1200 ou 1600 bars. On observe alors qu'un dégagement de chaleur (zone 56' de la figure 6) révélant une injection pilote se détecte plus aisément qu'une augmentation de pression telle que précédemment décrite (zone 56 de la figure 5), notamment du fait qu'au PMH, postérieur à l'injection pilote, il ne se produit pas de dégagement de chaleur. On constate aussi que pour la durée d'$_1$ d'activation correspondant à la courbe D'$_1$, aucune injection pilote n'est effectuée.

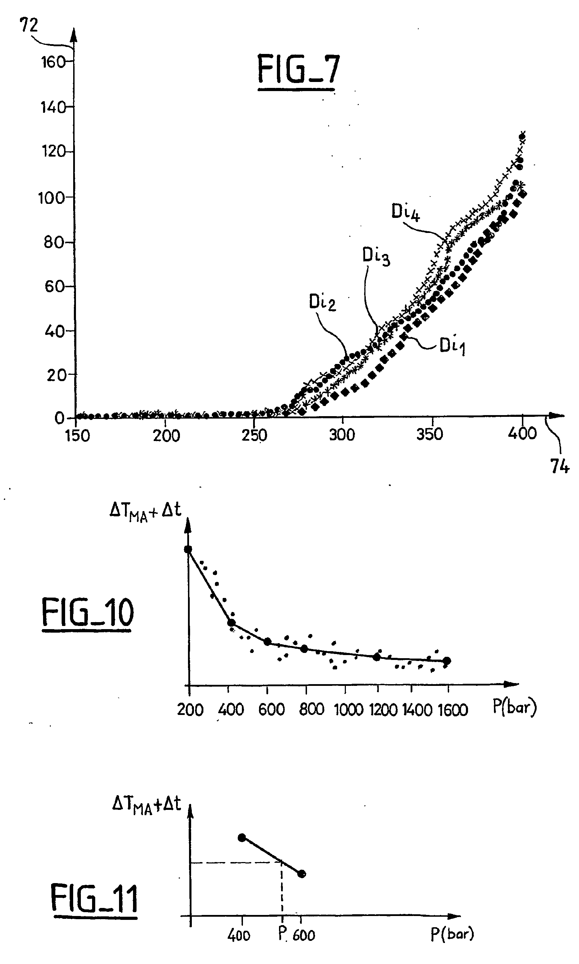

Dès lors, la détection du temps minimal d'activation au moyen des dégagements de chaleur calculés est plus précise, comme montré sur la figure 7 qui représente des mesures de dégagements de chaleur (axe 72 des ordonnées) en joules par degré de vilebrequin, en fonction de différentes durées d'activation mesurées en microsecondes (axe 74 des abscisses) pour quatre injecteurs testés il (courbe D$_{i1}$), i$_2$(courbe D$_{i2}$), i$_3$ (courbe D$_{i3}$), et i$_4$ (courbe D$_{i4}$). Une mesure de dégagement de chaleur est obtenue, pour un injecteur i$_j$ et pour une durée d'activation d$_j$ donnée, en intégrant la surface 56' de la figure 6 obtenue avec l'injecteur i$_j$ et la durée d$_j$ d'activation.

On constate ainsi que le dégagement de chaleur passe d'une valeur nulle à une valeur positive lorsque l'injection pilote a effectivement lieu dans le cylindre, aux alentours de 265 microsecondes, une telle variation étant plus simple à détecter qu'une variation dans la croissance d'un paramètre, comme effectué selon le premier mode de réalisation.

Par ailleurs, les essais effectués par des mesures de chaleur montrent une très faible dispersion dans les résultats obtenus ainsi qu'une grande robustesse pour les différentes pressions auxquelles ont été effectuées ces tests.

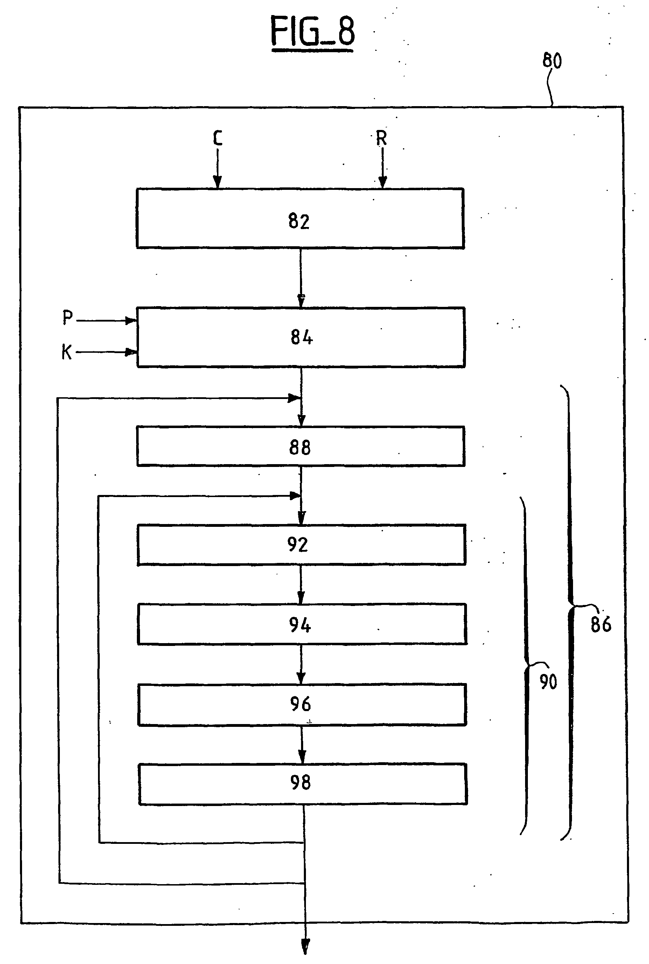

Sur la figure 8 est représenté un diagramme des opérations effectuées par une unité 80 corrigeant les commandes d'injection émises vis-à-vis de quatre injecteurs conformément à l'invention. A cet effet, cette unité 80 est informée du régime R et du couple C du moteur de façon à détecter (bloc 82) si le moteur opère à un point de fonctionnement auquel une détermination du décalage d'injection doit être effectuée, ce point étant défini par des conditions de couple C et de régime R du moteur ainsi que par la pression P du carburant à l'injection, cette pression P étant imposée par les conditions de couple C et de régime R.

Si tel est le cas, l'unité 80 effectue une détermination (bloc 84) qui fixe les instants d'injection de carburant à des valeurs prédéterminées. Dans cet exemple, ces instants sont fixés, pour l'injection principale, à plus quinze degrés et pour l'injection pilote à moins quinze degrés de vilebrequin. L'instant d'injection principale est fixé préalablement à l'instant d'injection pilote de façon à assurer le maintien du couple C délivré par le moteur et à ne pas perturber la marche du véhicule lors de la mesure.

Après une période de stabilisation du moteur d'environ 100 cycles, le régime R, le couple C et la quantité K de carburant injectée lors de l'injection principale sont mémorisés par l'unité 80.

Ensuite, pour chaque injecteur i considéré dans le moteur, l'unité 80 effectue une série d'opérations 86 évaluant le décalage de l'injecteur i dans les conditions précédemment mémorisées de régime R, de couple C et de quantité de carburant injecté K. Ainsi, la série d'opérations 86 peut être effectuée quatre fois, une fois pour chaque injecteur i, de façon à déterminer un décalage $\Delta t_i(P)$ de chaque injecteur i à la pression P d'injection de carburant.

Chaque série d'opérations 86 comprend cinq suites 90 d'évaluation du décalage $\Delta t_i(P)$ de l'injecteur considéré. Lorsqu'une suite 90 d'évaluations est amorcée pour un injecteur (bloc 88), les opérations suivantes sont effectuées:

Une première opération (bloc 92) détermine un seuil $S_{dQ}$ de dégagement de chaleur (utilisé comme décrit ultérieurement) en évaluant le dégagement $dQ_m$ de chaleur moyen mesuré peu avant que l'injection pilote de carburant soit effectuée, puis en ajoutant à cette valeur moyenne $d_{Qm}$ une quantité constante telle qu'un dégagement de chaleur supérieur au seuil $S_{dQ}$ soit détectable par rapport au dégagement moyen $dQ_m$. Dans cet exemple, quatre cycles de mesures sont utilisés pour calculer le dégagement $dQ_m$ de chaleur moyen et la quantité constante ajoutée est de 0,15 J/deg.

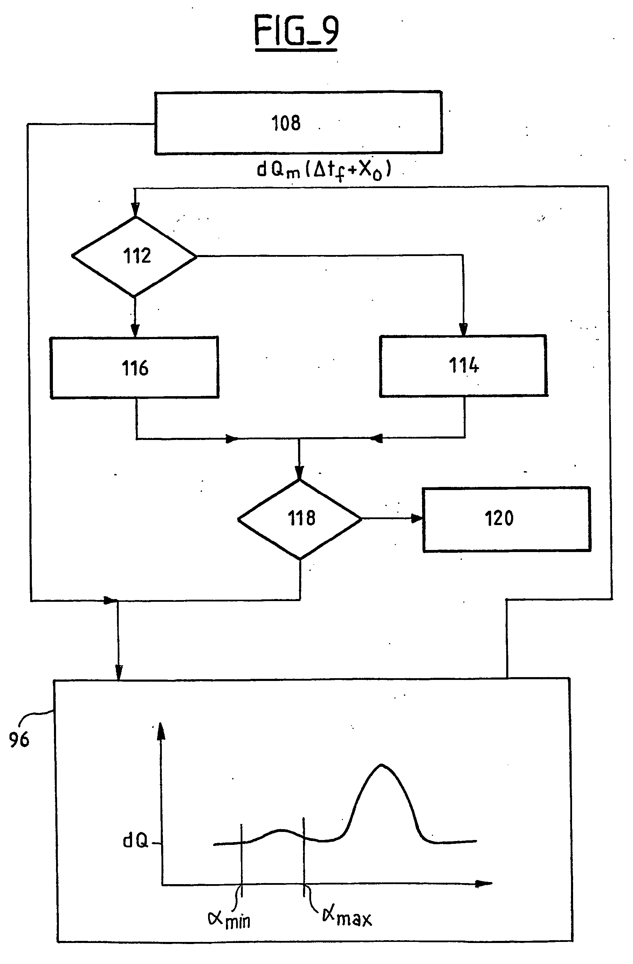

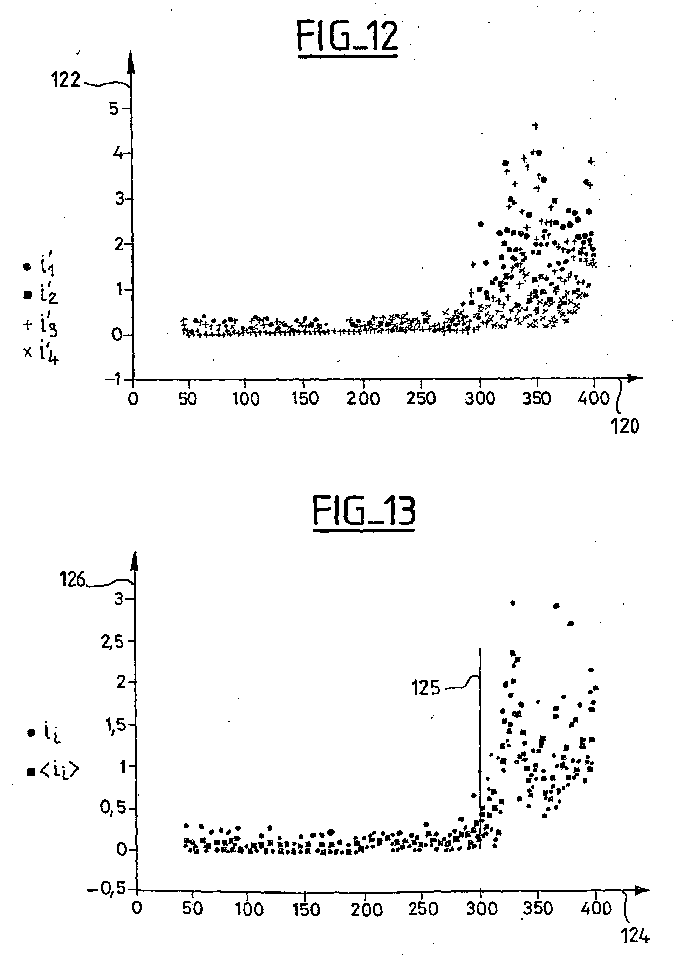

Lors d'une deuxième opération (bloc 94), l'unité 80 détermine une durée $\Delta t_f$ d'activation initiale faible, par exemple correspondant à l'injection de 0,01 milligramme de carburant, pour débuter la série des différentes durées d'activation et la détermination (bloc 96) du décalage $\Delta t_i(P)$. affectant l'injecteur i comme décrit ultérieurement à l'aide de la figure 9. Puis, le décalage $\Delta t_i(P)$ étant mesuré, sa valeur est mémorisée (bloc 98) en association avec la pression P d'injection utilisée afin de linéariser les mesures sur un domaine de pression, comme décrit ultérieurement à l'aide des figures 10 et 11.

La détermination du décalage $\Delta t_i(P)$ représentée à la figure 9 utilise un calcul automatique pour déterminer la valeur de la durée d'activation la plus faible entraînant une injection pilote de carburant dans le cylindre, c'est-à-dire un dégagement de chaleur. A cet effet, les diverses durées d'activation commandées par l'unité 80 sont considérées comme composées d'une partie fixe $\Delta t_f$, et d'une partie variable $X_o$. La détermination de la durée d'activation minimale, ou du temps minimal d'activation d'un injecteur, consiste donc à rechercher une valeur de $X_o$ minimale, dite $X_{om}$, telle qu'après un temps d'activation égal à $\Delta t_f + X_{Om}$ le dégagement de chaleur mesuré dans la chambre de combustion soit supérieur à $S_{dQ}$.

Une telle recherche peut être effectuée à l'aide de divers procédés. Dans cet exemple, une dichotomie est utilisée pour réduire un intervalle délimité par des variables initiales $X_{max}$ et $X_{min}$ définies lors d'une opération d'initiation de la dichotomie (bloc 108) de façon telle que, pour une durée d'activation égale à $\Delta t_f + X_{max}$, un dégagement de chaleur dû à l'injection pilote soit détecté et que, pour une durée d'activation égale à $\Delta t_f + X_{min}$, cette injection pilote ne soit pas détectée, tandis que la variable $X_o$ est alors fixée à $X_{max} + X_{min} / 2$.

Puis, le calculateur 80 effectue des mesures de dégagement de chaleur (bloc 96) pour une durée d'activation égale à $\Delta t_f + X_o$, comme décrit à l'aide de la figure 6, c'est-à-dire en intégrant le dégagement 56' mesuré pour un délai d'activation de $\Delta t_f + X_o$.

En d'autres termes, lors d'une opération 96, on mesure le dégagement $dQ_m (\Delta t_f + X_o)$ de chaleur moyen sur la période $[\alpha_{min} ; \alpha_{max}]$ où $\alpha_{min}$ et $\alpha_{max}$ correspondent à des valeurs d'angles de vilebrequin respectivement préalables et postérieures à l'angle du vilebrequin où se produit l'éventuelle injection pilote.

En comparant (bloc 112) ce dégagement $d_{Qm}(\Delta t_f + X_o)$ moyen avec le seuil $S_{dQ}$ de dégagement précédemment calculé sur ce même intervalle $[\alpha_{min} ; \alpha_{max}]$, on détermine si le dégagement $dQ_m(\Delta t_f + X_o)$ mesuré est supérieur au seuil $S_{dQ}$ auquel cas on peut déduire que $X_{min}$ est plus proche de $X_{Om}$ que $X_{max}$. Dans ce cas, la variable $X_{min}$ est maintenue à sa valeur initiale, et la variable $X_{max}$ prend la valeur de la variable $X_0$, la valeur de cette dernière, variable $X_0$ étant la moyenne $(X_{min} + X_{max})/2$ de ces nouvelles bornes $(X_{min}; X_{max})$ (bloc 114).

Inversement, si le dégagement $dQ_m (\Delta t_f + X_o)$ mesuré est inférieur au seuil $S_{dQ}$, on peut déduire que $X_{max}$ est plus proche de $X_{Om}$ que $X_{min}$. Dans ce cas, la variable $X_{max}$ est maintenue à sa valeur initiale, la variable $X_{min}$ prend la valeur de la variable $X_o$, la valeur de cette dernière variable $X_0$ étant calculée à partir des nouvelles bornes $(X_{min}; X_{max})$ (bloc 116).

Un test de convergence (opération 118) permet de vérifier si la période $[X_{min} ; X_{max}]$ satisfait à un critère de convergence donné, indicatif de la précision voulue dans le calcul du temps minimal d'activation $(\Delta t_f + X_o)$. Si ce critère de convergence est satisfait, c'est-à-dire si l'intervalle $[X_{min}; X_{max}]$ est inférieur à une durée donnée, l'unité 80 détermine la dernière valeur de $X_o$ comme étant égale à $X_{om}$, c'est-à-dire telle que le temps minimal d'activation mesuré est $\Delta t_f + X_{om}$ dans les conditions données (pression et régime) de fonctionnement (bloc 120).

Sinon, la période $[X_{min} ; X_{max}]$ étant trop grande, le calcul du dégagement de chaleur moyen sur la nouvelle période est effectué (bloc 96) ainsi que le test 112 sur cette nouvelle valeur et les opérations (blocs 114 et 116) déjà décrites.

Le stockage de ce résultat (bloc 98 de la figure 8) permet d'effectuer la moyenne des cinq valeurs calculées pour chaque paire donnée de conditions de pression et de régime.

Ces conditions de fonctionnement sont choisies de façon à couvrir l'ensemble de la plage de fonctionnement du moteur. A cet effet, en considérant que cette plage s'étend de 200 à 1600 bars (figure 10), une linéarisation des décalages mesurés est effectuée sur des plages de pression couvrant 200 bars de variation, telle qu'une plage allant de 400 à 600 bars.

Par la suite, lorsque le moteur fonctionne à une pression P comprise dans une telle plage de linéarisation, la valeur du décalage considéré pour cette pression P correspond à la valeur déterminée par cette linéarisation (figure 11).

Dans une autre réalisation de l'invention, on détecte le retard d'injection d'un injecteur en mesurant le courant ionique créé par une combustion de carburant. A cet effet, on intègre un capteur de courant ionique dans la chambre, par exemple à l'aide d'une bougie de préchauffage située dans le cylindre, cette bougie de préchauffage jouant le rôle d'une électrode transmettant un courant lorsque des ions issus d'une combustion sont situés à sa proximité. Dans une autre réalisation, l'injecteur est utilisé comme électrode.

La figure 12 représente un tel courant électrique (axe des ordonnées 122) exprimé en volts en fonction des différentes durées d'activation des injecteurs testés. Sur cette figure 12, les mesures maximales de courant ionique relatives à quatre injecteurs $i'_1$, $i'_2$, $i'_3$ et $i'_4$ sont représentées. Ces durées d'activation sont exprimées en microsecondes (axe des abscisses 120). On observe alors qu'une augmentation des durées d'activation génère une augmentation du courant ionique mesuré.

Toutefois, de par sa nature locale, la mesure du courant ionique donne des mesures plus dispersées que celles concernant une pression ou un dégagement de chaleur. C'est pourquoi, comme représenté sur la figure 13 pour un injecteur $i_i$, on peut réaliser plusieurs mesures de courant ionique pour une même durée d'activation et considérer la moyenne $<i_i>$ de ces courants d'activation comme la mesure associée à cette durée afin de déterminer la durée minimale 125 d'activation générant une injection pilote.

Une autre réalisation de l'invention utilise la détection du courant ionique généré par l'injection principale pour détecter la réalisation d'une injection pilote. En effet, en effectuant une injection pilote préalable à l'injection principale, la quantité principale de carburant brûle sensiblement plus tôt que lorsqu'elle arrive dans une chambre plus froide.

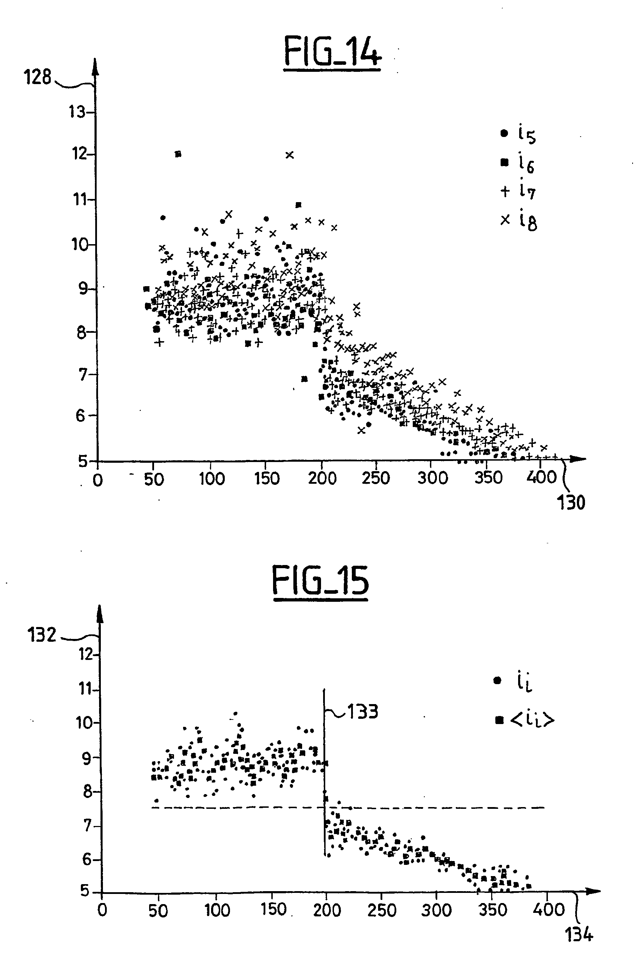

Sur cette figure 14 est représenté l'instant où l'injection principale est détectée, cet instant étant défini par des degrés vilebrequin (axe des ordonnées 128) dans la chambre de combustion en fonction de différentes durées d'activation (axe des abscisses 130) commandées à des injecteurs $i_5$, $i_6$, $i_7$ et $i_8$ pour des injections pilotes.

On remarque, dans un premier temps, que la distribution des mesures effectuées dans cette réalisation diffère de la distribution des mesures de courant effectuées dans la réalisation précédemment décrite. De fait, les mesures montrées à la figure 14 sont relatives à l'instant mesuré de l'injection principale de carburant, détecté par la mesure d'un courant ionique. Ainsi, en l'absence d'injection pilote (durée d'activation comprise entre 50 et 175 microsecondes), l'injection principale est détectée pour des valeurs de degrés vilebrequins comprises majoritairement entre huit et dix degrés. Inversement, en présence d'injection pilote (durée d'activation comprise entre 200 et 400 microsecondes), l'injection principale débute plus rapidement pour se stabiliser à cinq degrés de vilebrequins.

On remarque aussi, dans un deuxième temps, que la variation de la valeur mesurée (degrés de vilebrequins) est plus importante, et donc plus facilement détectable dans cette réalisation que la variation de courant ionique dans la réalisation précédemment décrite. De fait, le courant ionique créé par l'injection principale est plus important que le courant ionique créé par une injection pilote et sa mesure plus aisée.

De façon analogue à la réalisation précédemment décrite, des mesures multiples relatives à un injecteur $i_i$ (figure 15) peuvent être utilisées pour obtenir une mesure moyenne $<i_i>$ utilisée pour déterminer le seuil 133 indiquant la durée minimale d'activation générant une injection pilote.

Toutefois, les mesures de degrés vilebrequins ont aussi une distribution étendue et la durée d'injection minimale, où débute la diminution du courant ionique, peut être de détermination insuffisamment précise.

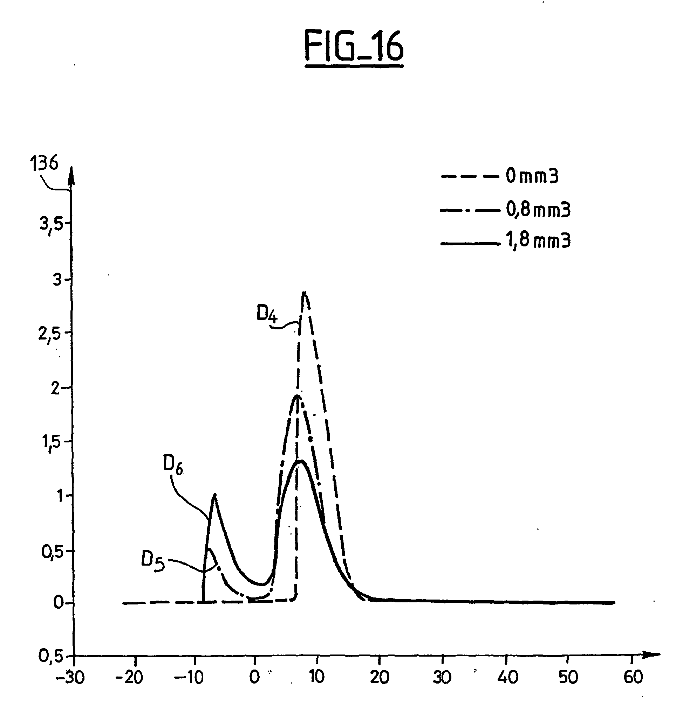

C'est pourquoi, dans une réalisation, on utilise une combinaison de la détection des deux phénomènes décrits ci-dessus, c'est-à-dire la détection d'un courant ionique dû à une injection pilote et l'influence de cette injection sur l'injection principale pour obtenir une détection fine et linéaire de l'instant d'injection comme représenté sur la figure 16.

Sur cette figure 16 est représentée la mesure de courant ionique (axe 136 des ordonnées) effectuée dans un cylindre pour des durées d'activation $d_4$ (courbe $D_4$), $d_5$ (courbe $D_5$) et $d_6$ (courbe $D_6$) d'activation distinctes de son injecteur. Les mesures de courant étant représentées suivant l'avancement du cycle en degrés de vilebrequins (axe 138 des abscisses), on remarque qu'en présence d'une injection pilote (courbes $D_5$ et $D_6$), l'injection principale est plus rapide et débute vers 3 degrés vilebrequins tandis qu'en l'absence d'injection pilote (courbe $D_4$), l'injection principale n'est détectée que vers huit degrés vilebrequins. Par ailleurs, on détecte l'injection pilote (courbes $D_5$ et $D_6$) vers moins huit degrés vilebrequins.

Dans une réalisation de l'invention, les mesures de décalages et les mémorisations qui en résultent sont effectuées périodiquement, par exemple tous les 1000 km parcourus par le véhicule.

Dans une variante de l'invention, les mesures et mémorisations sont effectuées lors des révisions du véhicule.

## Revendications

1. Moteur diesel comportant un dispositif de contrôle du débit d'injection de carburant comprenant au moins un injecteur de carburant, alimentant une chambre de combustion, commandé par un processeur muni de moyens (80) pour commander une série d'activations de l'injecteur de différentes durées, de moyens pour mesurer un temps minimal d'activation ($\Delta T_{MA}+\Delta t$) entre l'émission d'une commande et le début d'une injection, et de moyens pour commander ultérieurement l'injecteur en fonction du temps minimal d'activation mesuré, **caractérisé en ce qu'**il comprend des moyens pour évaluer le dégagement de chaleur (dQ) effectué par le mélange d'air et de carburant injecté dans la chambre et mesurer le temps minimal d'activation à partir de ces évaluations.

**2.** Moteur selon la revendication 1 **caractérisé en ce que** les moyens pour commander les durées d'activation comprennent des moyens pour modifier un temps minimal d'activation prédéterminé ($\Delta T_{MA}$) d'un décalage ($\Delta t$) résultant de la mesure.

**3.** Moteur selon la revendication 2 **caractérisé en ce que** le processeur comporte des moyens pour que les activations utilisées pour mesurer le dégagement de chaleur soient distinctes des activations commandant les injections principales de carburant destinées à générer un couple au moteur.

**4.** Moteur selon la revendication 3 **caractérisé en ce que** le processeur comporte des moyens pour que les activations utilisées pour mesurer le dégagement chaleur correspondent à des injections pilotes destinées à établir des conditions optimales de température dans le cylindre vis-à-vis des injections principales destinées à fournir le couple moteur.

**5.** Moteur selon l'une des revendications précédentes **caractérisé en ce que** le processeur comporte des moyens pour déterminer le dégagement de chaleur à partir de mesures de pression dans la chambre.

**6.** Moteur selon la revendication 5, **caractérisé en ce que** le processeur comporte des moyens pour déterminer le dégagement de chaleur à partir de mesures de pression dans la chambre à l'aide d'une relation du type :

$$\delta Q = 1/(\gamma-1) * (\gamma\ P*dV+V*dP),$$

où $\delta Q$ est le dégagement de chaleur, P et V la pression et le volume de ce mélange dans la chambre, dP et dV leurs variations et $\gamma$ est une constante.

**7.** Moteur selon l'une des revendications précédentes, **caractérisé en ce que** le processeur comprend des moyens pour déterminer le temps minimal d'activation mesuré en évaluant le dégagement de chaleur moyen sur un intervalle du cycle moteur comprenant l'injection pilote.

**8.** Moteur selon l'une des revendications précédentes **caractérisé en ce qu'**il comprend plusieurs injecteurs alimentés en carburant par une rampe commune.

**9.** Moteur selon l'une des revendications précédentes **caractérisé en ce que** la série d'activations de l'injecteur est effectuée à pression d'alimentation et à régime constants.

**10.** Moteur selon l'une des revendications précédentes **caractérisé en ce que** le processeur comprend des moyens pour effectuer de façon périodique les séries d'activations.

**11.** Processeur de commande du débit d'injection de carburant dans un moteur à combustion interne comprenant des moyens pour commander une série d'activations de différentes durées à un injecteur alimentant une chambre de combustion, des moyens pour mesurer un temps minimal d'activation ($\Delta T_{MA}+\Delta t$) entre l'émission d'une commande et le début d'une injection, et des moyens pour commander ultérieurement cet injecteur en fonction du temps minimal d'activation mesuré, **caractérisé en ce qu'**il comprend des moyens pour évaluer le dégagement de chaleur (dQ) effectué par le mélange d'air et de carburant dans la chambre et mesurer le temps minimal d'activation à partir de ces évaluations.

**12.** Processeur selon la revendication 11 **caractérisé en ce qu'**il comprend des moyens pour modifier un temps minimal d'activation prédéterminé ($\Delta T_{MA}$) d'un décalage ($\Delta t$) résultant de la mesure.

**13.** Processeur selon la revendication 11 ou 12 **caractérisé en ce qu'**il comprend des moyens pour que les activations utilisées pour mesurer le temps minimal d'activation soient distinctes des activations commandant les injections principales de carburant destinées à générer un couple moteur.

**14.** Processeur selon la revendication 13 **caractérisé en ce qu'**il comporte des moyens pour que les activations correspondent à des injections pilotes destinées à établir des conditions optimales de température dans le cylindre vis-à-vis de l'injection principale.

**Claims**

1. A diesel engine comprising a fuel-injection output control device, including at least one fuel injector, fuelling one combustion chamber, controlled by one processor equipped with means (80) for the purpose of commanding a series of injector activations of varying durations, means for measuring a minimal activation time ($\Delta T_{MA}+\Delta t$) between issuing a command and the start of an injection, and means for subsequently commanding the injector depending on the minimal activation time measured, **characterised in that** it comprises means for evaluating the heat emission (dQ) produced by the mixture of air and fuel injected into the chamber and for measuring the minimal activation time using such evaluations.

2. An engine according to claim 1, **characterised in that** the means for commanding the durations of activation include means for modifying a pre-determined minimal activation time ($\Delta T_{MA}$) of an offset in time ($\Delta t$) resulting from the measurement.

3. An engine according to claim 2, **characterised in that** the processor comprises means so that the activations used for measuring the heat emission are distinct from the activations commanding the main fuel injections destined to generate an engine torque.

4. An engine according to claim 3, **characterised in that** the processor comprises means so that the activations used for measuring the heat emission correspond to pilot injections destined to establish optimal temperature conditions inside the cylinder in relation to the main injections destined to provide the engine torque.

5. An engine according to one of the preceding claims, **characterised in that** the processor comprises means for determining the heat emission using pressure measurements inside the chamber.

6. An engine according to claim 5, **characterised in that** the processor comprises means for determining the heat emission using pressure measurements inside the chamber by way of a relation of the type:

$$\delta Q = 1/(\gamma-1)*(\gamma-P*dV+V*dP),$$

where $\delta Q$ is the heat emission, P and V the pressure and the volume of such mixture inside the chamber, dP and dV their variations, and y a constant.

7. An engine according to one of the preceding claims, **characterised in that** the processor comprises means for determining the minimal activation time measured, by evaluating the average heat emission across an engine cycle interval comprising the pilot injection.

8. An engine according to one of the preceding claims, **characterised in that** it comprises several injectors fuelled by way of a common ramp.

9. An engine according to one of the preceding claims, **characterised in that** the series of injector activations is performed under fuelling pressure and at constant speed.

10. An engine according to one of the preceding claims, **characterised in that** the processor comprises means for periodically performing the series of activations.

11. A fuel-injection output command processor inside an internal combustion engine comprising means for commanding a series of injector activations of varying durations towards an injector fuelling a combustion chamber, means for measuring a minimal activation time ($\Delta T_{MA}+\Delta t$) between emitting a command and starting an injection, and means for subsequently commanding such injector depending on the minimal activation time measured, **characterised in that** it comprises means for evaluating the heat emission (dQ) produced by the mixture of air and fuel inside the chamber and for measuring the minimal activation time using such evaluations.

12. A processor according to claim 11, **characterised in that** it comprises means for modifying a pre-determined minimal activation time ($\Delta T_{MA}$) of an offset in time ($\Delta t$) resulting from the measurement.

**13.** A processor according to claims 11 or 12, **characterised in that** it comprises means so that the activations used for measuring the minimal activation time are distinct from the activations commanding the main fuel injections destined to generate an engine torque.

**14.** A processor according to claim 13, **characterised in that** it comprises means so that the activations correspond to pilot injections destined to establish optimal temperature conditions inside the cylinder in relation to the main injection.

**Patentansprüche**

**1.** Dieselmotor mit einer Kontrollvorrichtung für die Menge an eingespritztem Treibstoff mit zumindest einer Treibstoff Einspritzvorrichtung, die eine Verbrennungskammer versorgt, und die von einem Prozessor angesteuert wird, der mit Mitteln (80) zur Ansteuerung einer Reihe von unterschiedlich langen Aktivierungen der Einspritzvorrichtung, mit Mitteln zur Messung einer Mindestaktivierungszeit ($\Delta T_{MA} + \Delta t$) zwischen der Ausgabe eines Befehls und dem Beginn eines Einspritzvorganges, und mit Mitteln zur späteren Ansteuerung der Einspritzvorrichtung in Abhängigkeit von der gemessenen Mindestaktivierungszeit ausgestattet ist, der **dadurch gekennzeichnet ist, dass** er Mittel zur Auswertung der Hitzeabgabe (dQ) enthält, die durch die Mischung aus Luft und Treibstoff entsteht, die in die Kammer eingespritzt wird, sowie Mittel zum Messen der Mindestaktivierungszeit basierend auf diesen Berechnungen.

**2.** Motor nach Anspruch 1, der **dadurch gekennzeichnet ist, dass** die Mittel zur Ansteuerung der Aktivierungszeiten wiederum Mittel zum Verändern einer vorbestimmten Mindestaktivierungszeit ($\Delta T_{MA}$) um eine Verschiebung ($\Delta t$), die sich aus der Messung ergibt, enthalten.

**3.** Motor nach Anspruch 2, der **dadurch gekennzeichnet ist, dass** der Prozessor Mittel enthält, damit sich die zum Messen der Hitzeabgabe verwendeten Aktivierungen von jenen Aktivierungen unterscheiden, die die Haupteinspritzvorgänge des Treibstoffs ansteuern, die dazu bestimmt sind, das Motordrehmoment zu generieren.

**4.** Motor nach Anspruch 3, der **dadurch gekennzeichnet ist, dass** der Prozessor Mittel enthält, damit die zum Messen der Hitzeabgabe verwendeten Aktivierungen den Piloteinspritzungen entsprechen, die dazu bestimmt sind, die optimalen Temperaturbedingungen im Zylinder im Verhältnis zu den Haupteinspritzungen herzustellen, die dazu bestimmt sind, das Motordrehmoment zu generieren.

**5.** Motor nach einem der vorherigen Ansprüche, der **dadurch gekennzeichnet ist, dass** der Prozessor Mittel zur Bestimmung der Hitzeabgabe basierend auf Messungen des Kammerdrucks enthält.

**6.** Motor nach Anspruch 5, der **dadurch gekennzeichnet ist, dass** der Prozessor Mittel zur Bestimmung der Hitzeabgabe basierend auf den Druckmessungen in der Kammer anhand der Gleichung des folgenden Typs enthält:

$$\delta Q = 1/(\gamma-1) * (\gamma\, P*\delta V + V*\delta P),$$

wobei $\delta Q$ die Hitzeabgabe, P und V der Druck und das Volumen dieser Mischung in der Kammer, dP und dV ihre Variationen und $\gamma$ eine Konstante sind.

**7.** Motor nach einem der vorherigen Ansprüche, der **dadurch gekennzeichnet ist, dass** der Prozessor Mittel zur Bestimmung der Mindestaktivierungszeit enthält, die anhand der Berechnung der durchschnittlichen Hitzeabgabe in einem Intervall des Motorzyklus inklusive Piloteinspritzung gemessen wird.

**8.** Motor nach einem der vorherigen Ansprüche, der **dadurch gekennzeichnet ist, dass** er mehrere Einspritzvorrichtungen enthält, die von einem Common Rail versorgt werden.

**9.** Motor nach einem der vorherigen Ansprüche, der **dadurch gekennzeichnet ist, dass** die Reihe der Aktivierungen der Einspritzvorrichtung bei konstantem Versorgungsdruck und konstanter Drehzahl erfolgt.

**10.** Motor nach einem der vorherigen Ansprüche, der **dadurch gekennzeichnet ist, dass** der Prozessor Mittel zur regelmäßigen Ausführung von Aktivierungsreihen enthält.

**11.** Prozessor zur Ansteuerung der Einspritzmenge an Treibstoff in einen Innenverbrennungsmotor mit den entsprechenden Mitteln zur Ansteuerung einer Reihe von unterschiedlich langen Aktivierungen einer Einspritzvorrichtung zur Versorgung einer Verbrennungskammer, mit Mitteln zum Messen der Mindestaktivierungszeit ($\Delta T_{MA} + \Delta t$) zwischen der Ausgabe eines Befehls und dem Beginn eines Einspritzvorganges, und mit Mitteln zur späteren Ansteuerung der Einspritzvorrichtung in Abhängigkeit von der gemessenen Mindestaktivierungszeit, der **dadurch gekennzeichnet ist, dass** er Mittel zur Auswertung der Hitzeabgabe (dQ) enthält, die durch die Mischung aus Luft und Treibstoff entsteht, die in die Verbrennungskammer eingespritzt wird, sowie Mittel zum Messen der Mindestaktivierungszeit basierend auf diesen Berechnungen.

**12.** Prozessor nach Anspruch 11, der **dadurch gekennzeichnet ist, dass** er Mittel zum Verändern einer vorbestimmten Mindestaktivierungszeit ($\Delta T_{MA}$) um eine Verschiebung ($\Delta t$), die sich aus der Messung ergibt, enthält.

**13.** Prozessor nach Anspruch 11 oder 12, der **dadurch gekennzeichnet ist, dass** er Mittel enthält, damit sich die zum Messen der Hitzeabgabe verwendeten Aktivierungen von jenen Aktivierungen unterscheiden, die die Haupteinspritzvorgänge des Treibstoffs ansteuern, die dazu bestimmt sind, das Motordrehmoment zu generieren.

**14.** Prozessor nach Anspruch 13, der **dadurch gekennzeichnet ist, dass** er Mittel enthält, damit die zum Messen der Hitzeabgabe verwendeten Aktivierungen Piloteinspritzungen entsprechen, die dazu bestimmt sind, die optimalen Temperaturbedingungen im Zylinder gegenüber den Haupteinspritzungen herzustellen.

## FIG_1

## FIG_2

FIG_3

FIG_4

FIG_5

FIG_6

FIG_7

FIG_10

FIG_11

# FIG_8

# FIG_9

$$dQ_m(\Delta t_f + X_0)$$

## FIG_12

## FIG_13

## FIG_14

## FIG_15

# FIG_16